(19) Europäisches Patentamt
European Patent Office
Office européen des brevets

(11) Publication number: **0 342 810 A2**

(12) **EUROPEAN PATENT APPLICATION**

(21) Application number: **89304312.5**

(51) Int. Cl.[4]: **C09B 23/02 , C07C 47/46**

(22) Date of filing: **28.04.89**

(30) Priority: **20.05.88 US 197039**

(43) Date of publication of application:
**23.11.89 Bulletin 89/47**

(84) Designated Contracting States:
**BE DE FR GB IT NL**

(71) Applicant: **MINNESOTA MINING AND MANUFACTURING COMPANY**
**3M Center, P.O. Box 33427**
**St. Paul, Minnesota 55133(US)**

(72) Inventor: **Leichter, Louis M. c/o Minnesota Mining and Manufacturing Company 2501 Hudson Road**
**St. Paul Minnesota 55144-1000(US)**

(74) Representative: **Baillie, Iain Cameron et al**
**c/o Ladas & Parry Isartorplatz 5**
**D-8000 München 2(DE)**

(54) **Cyanine dyes and preparation thereof.**

(57) A compound of the formula:

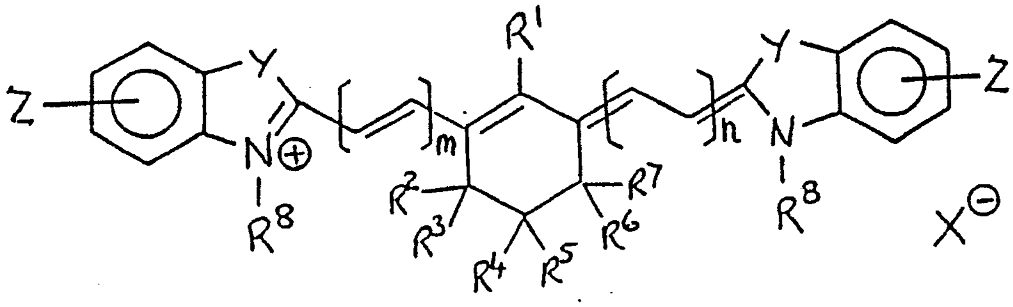

(I)

in which:
m and n are 0 or integers selected from 1 to 5 such that (m + n) is at least 2,
$R^1$ is a halogen atom,
$R^2$ to $R^7$ are independently selected from the group consisting of hydrogen, alkyl groups of up to 6 carbon atoms; aryl groups of up to 20 carbon atoms; halogen; or any two of $R^2$ to $R^7$ on adjacent carbon atoms may comprise the necessary atoms to complete a 5- or 6-membered carbocyclic or heterocyclic ring; at least one of $R^2$ to $R^7$ being other than hydrogen;
each $R^8$ independently represents a substituent of up to 20 carbon atoms selected from the group consisting of optionally substituted acyclic hydrocarbon groups; alkaryl groups; and aryl groups;
each Y is independently selected from the group consisting of S, Se, C=C and $CR^9R^{10}$ in which $R^9$ and $R^{10}$ are independently represent a substituted or non-substituted, aliphatic groups of up to 20 carbon atoms, or $R^9$ and $R^{1}$ together represent the necessary atoms to complete a 5- or 6-membered carbocyclic ring,
each Z independently represents one or more substituents selected from the group consisting of hydrogen, halogen, nitro, cyano, optionally substituted alkylsulphonyl of up to 12 carbon atoms, optionally substituted arylsulphonyl of up to 12 carbon atoms and optionally substituted arylcarbonyl of up to 12 carbon atoms, and
$X^-$ represents an anion which may optionally be incorporated with one $R^8$ group to form an internal salt.

EP 0 342 810 A2

Xerox Copy Centre

# CYANINE DYES AND PREPARATION THEREOF

## FIELD OF THE INVENTION

This invention relates to cyanine dyes, to the preparation thereof and to intermediates for use in their preparation. In particular the invention relates to cyanine dyes containing a substituted cyclohexene ring in the conjugated chain.

## BACKGROUND TO THE INVENTION

Infra-red cyanine dyes are known and have been used as sensitizers for organic photoconductors as disclosed in U.S. Patent Nos. 4 337 305 and 4 617 247 and Japanese Patent Application No. JP 59 217761 and as dyes in optical recording media as disclosed in Japanese Patent Application Nos. JP 62 011682, JP 62 081638, Jp 62 082080 and JP 62 082190.

Many of the infra-red cyanine dyes possess a 5- or 6-membered ring in the conjugated chain of the molecule since the presence of this ring provides the dye with enhanced stability. There has been little disclosure of substituted cyclohexene and cyclopentene rings in cyanine dyes. It is known that the presence of the halogen atom in the 2-position of the cyclohexene ring gives the dyes a bathochromic shift into the infra-red. However the disclosure of additional substituents has been limited to the presence of one or two alkyl groups in the 5- position as described in J. Org. Chem. USSR (Engl. Transl.) 1978, 14, 2046; Zh. Org. Chim 1978, 14, 2214 and Japanese Patent Application Nos. JP 61 248789 and JP 62 82082.

It is believed the limited disclosure of cyanine dyes having a substituted cyclohexene ring in the conjugated chain is due to the difficulty in preparing a substituted 1-formyl-3-hydroxymethylene-cyclohexene intermediate which is generally in the preparation of the dyes. Known preparations of 2-chloro-1-formyl-3-hydroxymethylene cyclohexene intermediates are described by Reynolds and Drexhage in J. Org. Chem 1977, 42, 885. Their preparation involves the reaction of dimethylformamide with phosphorus oxychloride to form the Vilsmeier intermediate and the addition of cyclohexanone in a solvent such as methylene chloride or chloroform. The reaction mixture is poured onto ice to quench the reaction and the solvent evaporated to precipitate the product. This method suffers from several disadvantages. The use of methylene chloride as a cosolvent results in a two phase mixture on quenching into water. Consequently the excess $POCl_3$ is not hydrolyzed well and remains in the methylene chloride layer where it becomes entrained in the product. Because the product is also soluble in methylene chloride a gum results as the methylene chloride evaporates. This impure product containing unneutralized $POCl_3$ requires further purification to prevent decomposition. Thus previous preparations of the ring substituted 2-chloro-1-formyl-3-hydroxymethylene-cyclohexene are difficult. Consequently, preparations of dyes derived from these materials are rare.

A second preparation of dyes containing ring intermediates involves condensation of dye-base heterocycles with bis-anils. Preparation of these anils is also described in the above mentioned J. Org. Chem. USSR (Engl. Transl.) 1978, 14, 2046; Zh. Org. Khim. (1978) 14, 2214 reference. This preparations results in generation of hydrogen chloride, involves neutralization of the strongly acidic solution with base, solvent removal redissolution and treatment with aniline. Preparation of these intermediates is tedious and requires large amounts of caustics for neutralization, cooling baths, and solvent extraction and removal techniques. Accordingly this method has limited utility in the preparation of dyes.

We have now found the necessary reaction conditions for producing high yields of optionally substituted 2-halo-1-formyl-3-hydroxymethalene-cyclohexene of excellent purity. The substituted cyclohexenes, many of which are novel, are useful intermediates for the preparation of novel infra-red cyanine dyes having a substituted cyclohexene ring in the conjugated chain by simple chemical reaction techniques.

## SUMMARY OF THE INVENTION

According to the one aspect of the invention there is provided a compound of the formula:

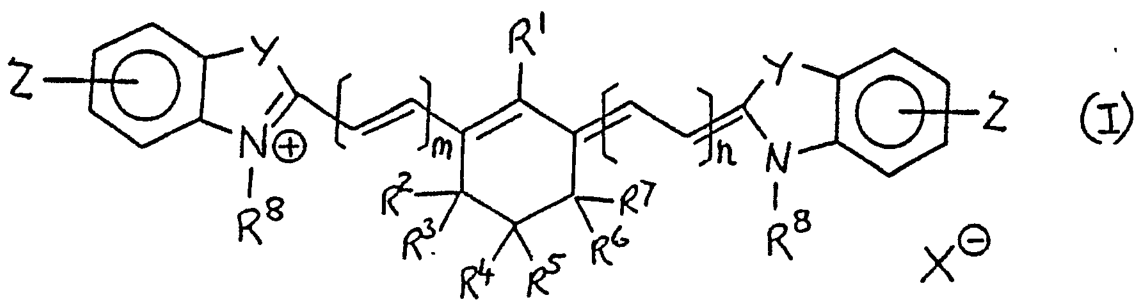

in which:

m and n are 0 or integers independently selected from 1 to 5 such that (m + n) is at least 2,

$R^1$ is a halogen atom, preferably Cl, Br or I,

$R^2$ to $R^7$ are independently selected from the group consisting of hydrogen, alkyl groups of up to 6 carbon atoms e.g methyl, t-butyl; aryl groups of up to 20 carbon atoms e.g. phenyl; halogen eg. Br; or any two of $R^2$ to $R^7$ on adjacent carbon atoms may comprise the necessary atoms to complete a 5- or 6-membered carbocyclic or heterocyclic ring e.g. a benzene ring; at least one of $R^2$ to $R^7$ being other than hydrogen;

each $R^8$ independently represents a substituent of up to 20 carbon atoms selected from the group consisting of optionally substituted acyclic hydrocarbon groups preferably aliphatic, such as an alkyl group (including substituted alkyl), preferably containing from 1 to 13 carbon atoms, e.g. methyl, ethyl, propyl, isopropyl, butyl, sec-butyl, hexyl, cyclohexyl, dodecyl, octadecyl, hydroxyalkyl (e.g. omega-hydroxyethyl, omega-hydroxypropyl, etc.), alkenyl groups, such as allyl, 1-propenyl, 2-propenyl, 1-butenyl, 2-butenyl and 3-butenyl, etc.; alkaryl groups such as benzyl and beta-phenylethyl; and aryl groups e.g. phenyl, p-tolyl, o-tolyl, 3,4-dichlorophenyl, etc.;

each Y is independently selected from the group consisting of S, Se, C=C and $CR^9R^{10}$ in which $R^9$ and $R^{10}$ are independently selected from the group consisting of a substituted or non-substituted, aliphatic groups of up to 20 carbon atoms, such as an alkyl group of from 1 to 12 carbon atoms, e.g., methyl, gamma-sulphopropyl, isopropyl, butyl, sec-butyl, omega-sulphobutyl, dodecyl, beta-hydroxyethyl, gamma-hydroxypropyl, beta-methoxyethyl, beta-ethoxyethyl, allyl, benzyl, beta-phenylethyl, beta-carboxyethyl, carboxymethyl, gamma-carboxypropyl, beta-acetoxyethyl, beta-acetoxypropyl, carbomethoxymethyl, and carboxyethoxyethyl, or $R^9$ and $R^{10}$ together represent the necessary atoms to complete a 5- or 6-membered carbocyclic ring,

each Z independently represents one or more substituents selected from the group consisting of hydrogen, halogen, nitro, cyano, optionally substituted alkylsulphonyl generally of up to 12 carbon atoms, optionally substituted arylsulphonyl generally of up to 12 carbon atoms and optionally substituted arylcarbonyl generally of up to 12 carbon atoms, preferably each Z is in the 5-position and is phenylsuphonyl, or benzoyl and

$X^-$ represents an anion, eg. halogen, p-toluene sulfonate anion, alkyl sulphonate anion, perchlorate tetrafluorobroate or trihalide, alternatively $X^-$ may be incorporated with one $R^8$ group to form an internal salt,

with the proviso that:

(i) when $R^2=R^3=R^6=R^7=H$, $R^4=R^5=CH_3$ (or any alkyl) and Y is $CR^9R^{10}$ then each Z is not halogen, and

(ii) when $R^1=Cl$, $R^4=CH_3$ (or any alkyl) and Y is S at least one of $R^2$, $R^3$, $R^5$, $R^6$ and $R^7$ is other than hydrogen.

According to a further aspect of the invention there is provided a compound of the formula:

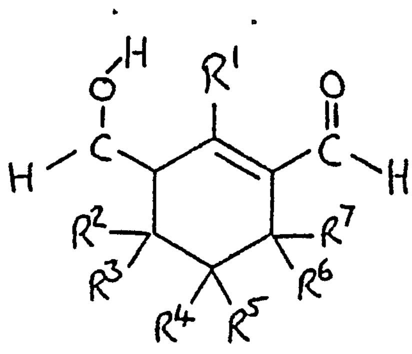

(II)

in which:

$R^1$ to $R^7$ are as defined above,

with the proviso that:

(i) at least one of $R^2$ to $R^7$ is other than hydrogen,

(ii) when $R^5$ is t-butyl at least one of $R^2$, $R^3$, $R^4$, $R^6$ and $R^7$ is other than hydrogen, and

(iii) when $R^4$ and $R^5$ are $CH_3$ and $R^2$, $R^3$, $R^5$ and $R^6$ are hydrogen, $R^1$ is not Br.

According to a further aspect of the invention there is provided a method for preparing a 2-halo-1-formyl-3-hydroxymethylene-cyclohexene or a substituted derivative thereof e.g. the compounds of formula (II) which comprises reacting dimethylformamide with a phosphorus oxyhalide e.g. phosphorus oxychloride, phosphorus oxybromide etc. to form a reaction product and thereafter adding an optionally substituted cyclohexanone and allowing the resulting mixture to react to form the desired product, in which the reaction is conducted in the presence of excess dimethylformamide as a solvent and/or in the presence of a water miscible solvent.

The key to the preparation of the substituted cyclohexene in accordance with the invention is the replacement of methylene chloride or chloroform used in the prior art by a water miscible solvent or preferably excess dimethylformamide as a solvent for cyclohexanone. The presence of a water miscible solvent or dimethylformamide, which is miscible with water, results in a single phase solution. Upon quenching, the phosphorus oxyhalide, eg. $POCl_3$, is hydrolysed by the water and the product precipitates from water. Filtration and washing of the product until neutral to pH paper gives the pure product. The product requires no further purification, can be stored for long periods and is pure enough for use in cyanine dye preparations.

The compounds of general formula (II) may be used to prepare cyanine dyes in accordance with the following reaction scheme:

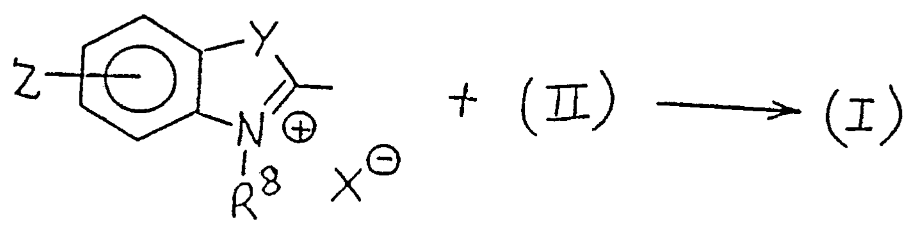


The reaction is generally conducted in a solvent with heating to the boiling point of the mixture. Suitable solvents include ethanol and more preferably a mixture of acetic acid and acetic anhydride. The cyanine dye often crystallizes upon cooling to room temperature.

The synthesis of dyes in this manner is well known and is described, for example in Slominskii, Yu. L., Radchenko, I.D. and Tolmachev, A.I. J. Org. Chem. USSR (Engl. Transl.) 1978, 14, 2046; Zh. Org. Khim 1978, 14, 2214.

Preferred dyes of Formula (I) are those in which Y is S, or $CR^9R^{10}$, more preferably $C(CH_3)_2$.

When Y is C = C the conjugated chain of the dye may be linked to the heterocyclic ring via the carbon atom adjacent to the nitrogen atom or to the carbon atoms in a para-position relative to the nitrogen atom. Thus such dyes may possess a nucleus of the following structures.

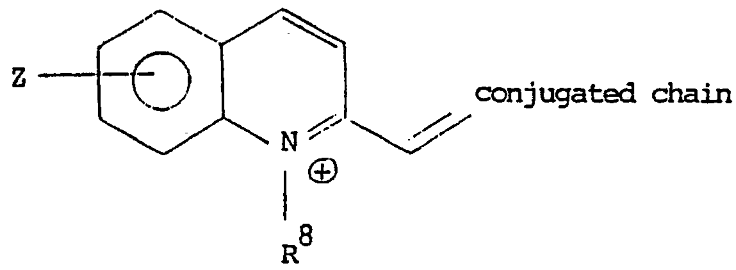

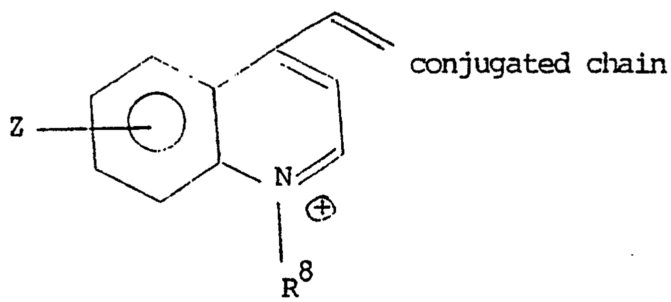

The preparation of these types of structures are disclosed in the above reference.

Preferred compounds of Formula (I) and Formula (II) are those in which $R^1$ is chlorine.

The cyanine dyes of the invention are generally infra-red absorbing dyes and find utility in sensitizers eg. for organic photoconductors of the type known in the prior art. Suitable photoconductor systems are disclosed, for example, in US Patent Nos. 4 337 305, 4 617 247, Japanese Patent Application No. JP 59 217 761 and British Patent Application No. 8712151. The cyanine dyes also find utility as recording media for optical data storage elements.

The invention will now be illustrated by the following non-limiting Examples.

The following Tables 1 and 2 identify the Intermediate Compounds and Cyanine Dyes referred to in the Examples.

TABLE 1

INTERMEDIATE COMPOUNDS

(1)

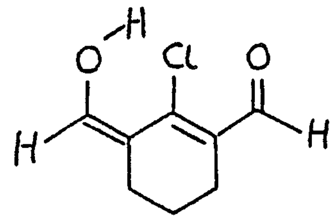

(2)

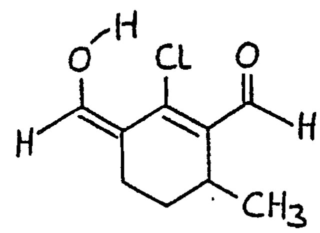

(3)

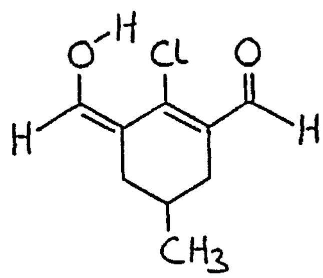

(4)

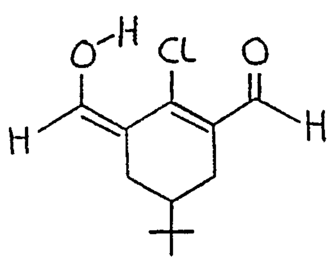

(5)

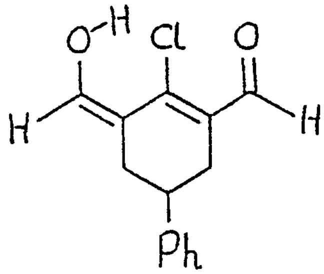

TABLE 2

CYANINE DYES

(1)

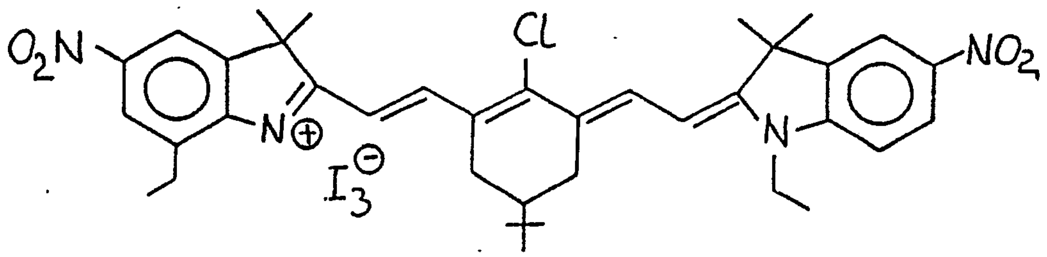

(2)

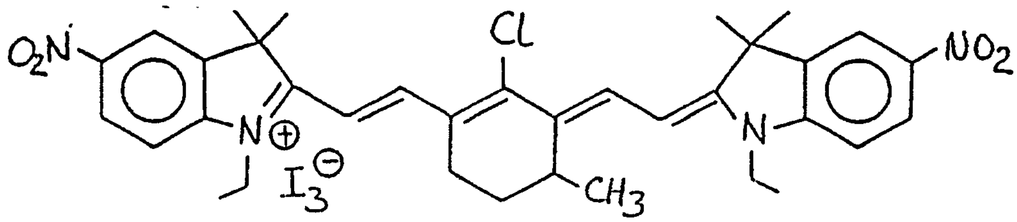

(3)

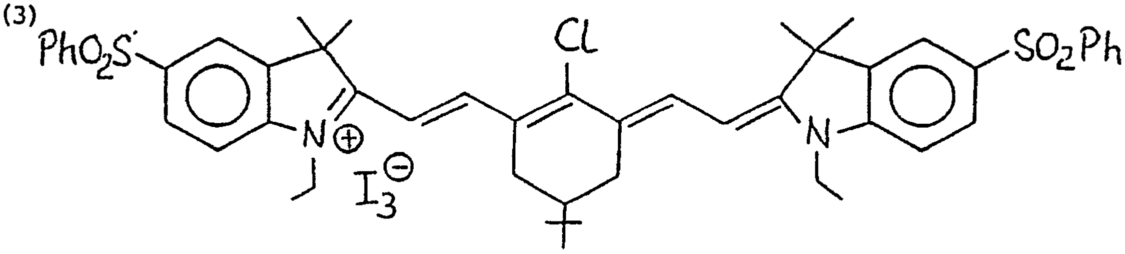

(4)

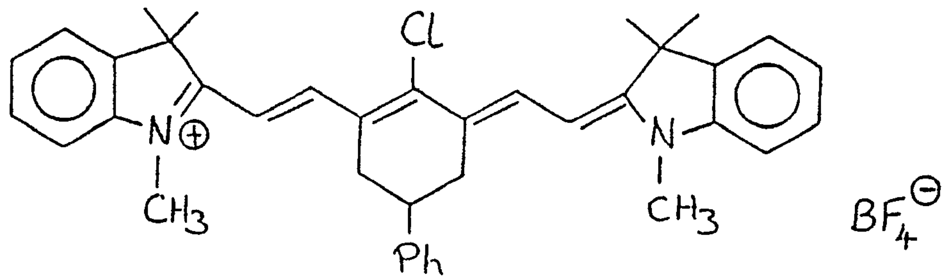

(5)

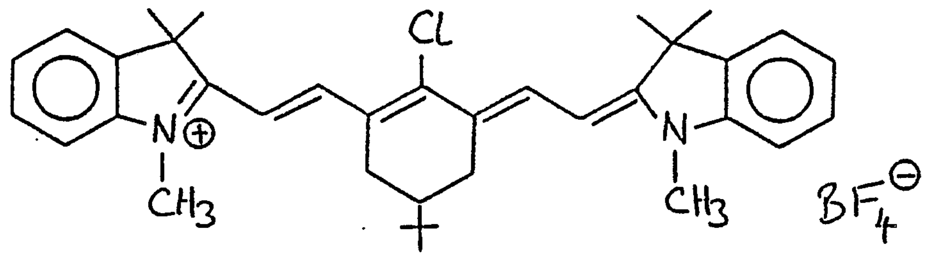

(6)

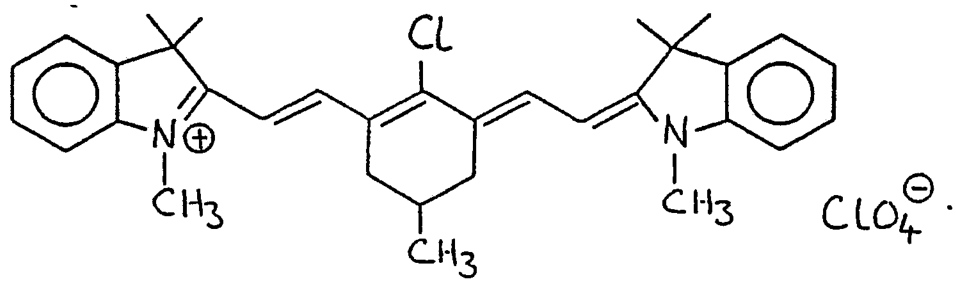

(7)

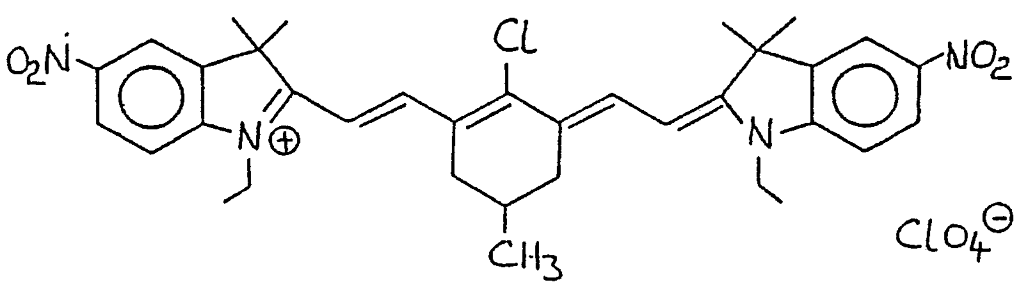

(8)

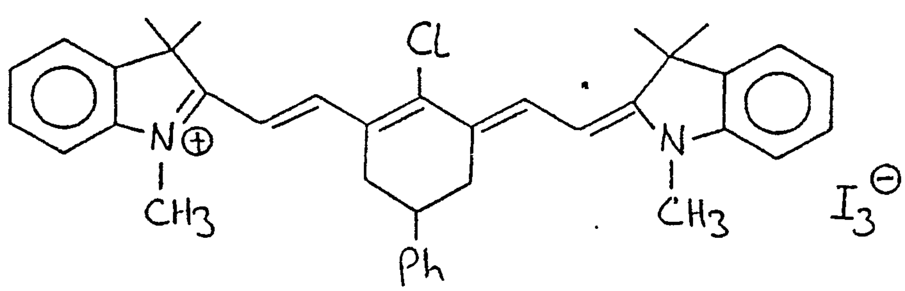

(9)

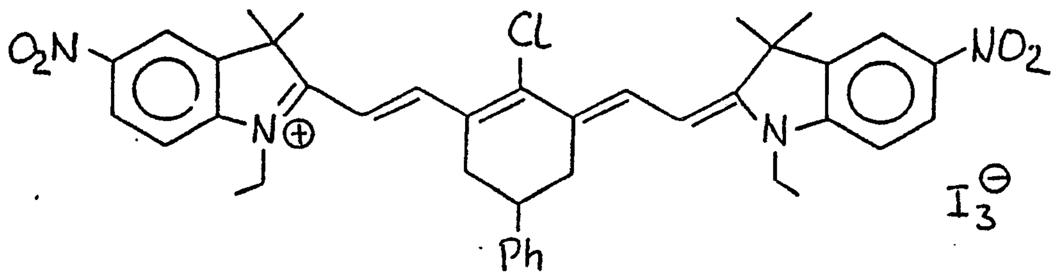

(10)

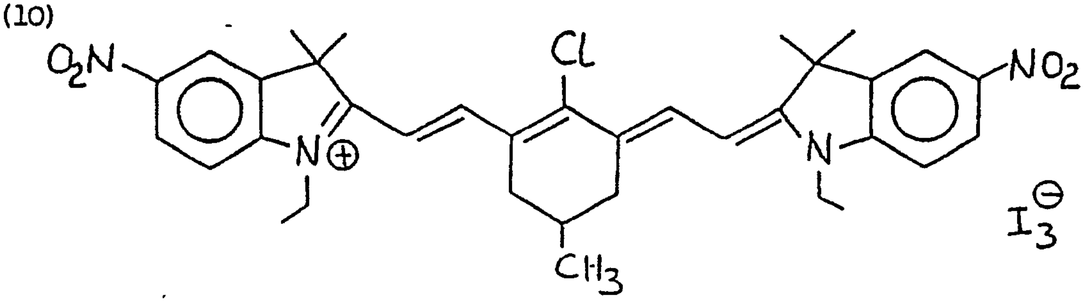

(11)

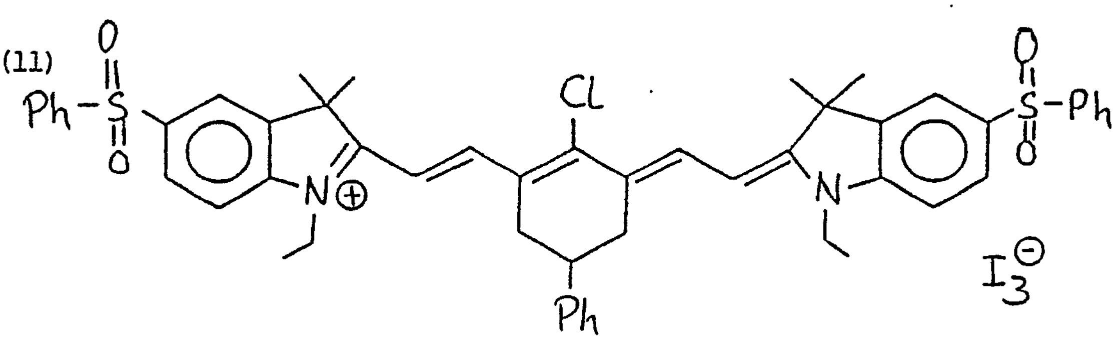

(12)

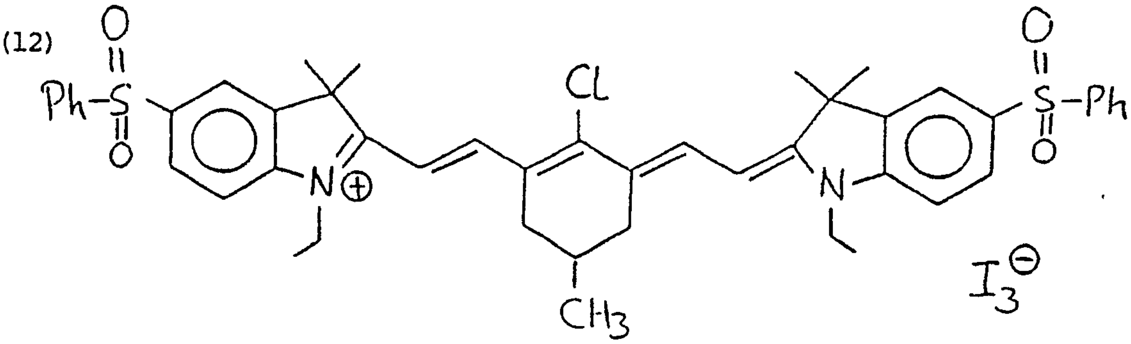

(13)

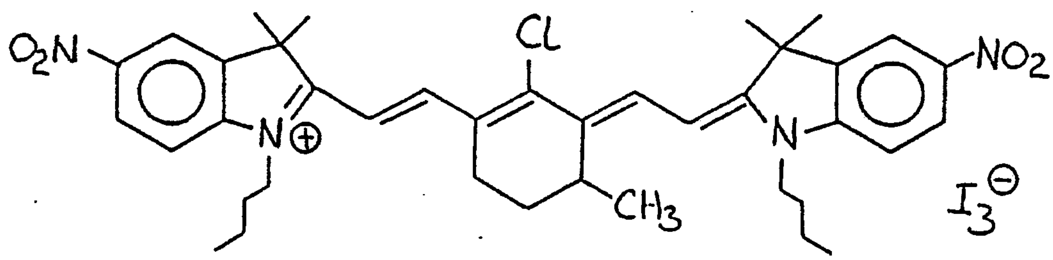

(14)

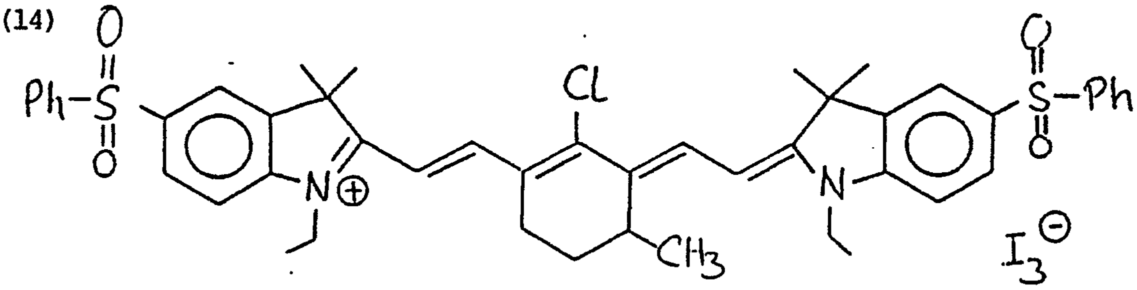

(15)

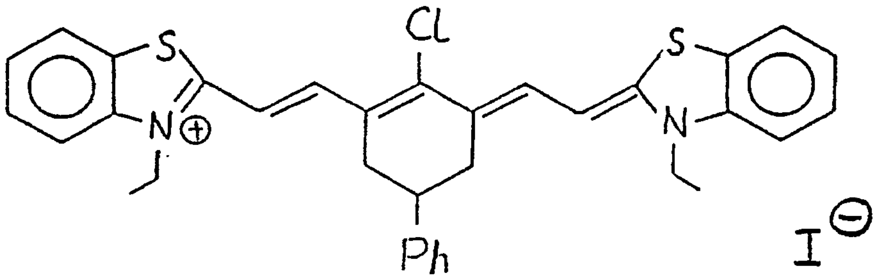

EXAMPLE 1

Preparation of 2-Chloro-1-formyl-3-hydroxymethylene-cyclohexene: Intermediate (1)

Into a 500ml round bottomed flask equipped with magnetic stirrer, nitrogen blanket, condenser, thermometer, and pressure-equalizing addition funnel, was placed 40 ml (37.76g, 0.517 mol) dry dimethylformamide (DMF). The material was cooled in an ice bath and 37ml (60.87g, 0.400 mol) of phosphorus oxychloride was slowly added over 45 min through the addition funnel. The temperature was kept at 10 to 15° C throughout the addition. Upon completion of the addition, the ice bath was removed, replaced with a water bath, and the reaction mixture allowed to warm to room temperature. The reaction was then kept at room temperature for 30 minutes.

To the thus formed Vilsmeier adduct was slowly added a solution of 10.0g (0.102 mol) of cyclohexanone in 50ml of dry DMF. This addition was carried out using a clean pressure-equalizing addition funnel. At the completion of the addition, the temperature was 50 °C despite the water bath. The water bath was removed, replaced by heating mantle and the orange solution kept between 50 to 60 °C for 3 hours.

The orange-red solution was poured onto 300ml of ice, 200ml of water was added, and the solution stirred. After about 20 minutes, a yellow precipitate began to develop. The reaction was allowed to stir overnight. The yellow powder was filtered off and washed with copious amounts of water until the washings were neutral to pH paper. The material was sucked dry, dried in air, and finally dried in a vacuum over at 50 °C to afford 13.05g (74%) of pure product; melting point = 124 to 126 °C. TLC indicated the compound to be very pure. NMR and IR were in agreement with the assigned structure.

## EXAMPLE 2

### Preparation of 4-methyl-2-chloro-1-formyl-3-hydroxymethylene-cyclohexene: Intermediate (2)

This material was prepared in an identical manner to Example 1 from 40ml (37.76g, 0.157 mol) of dimethylformamide, 37ml (60.87g, 0.400 mol) of phosphorus oxychloride, and 11.22g (0.10 mol) of 3-methylcyclohexanone in 55ml of DMF. The yield was 14.83g (79%); melting point = 135 to 137 °C. TLC indicated the compound to be very pure. IR and NMR were in agreement with the assigned structure.

## EXAMPLE 3

### Preparation of 5-methyl-2-chloro-1-formyl-3-hydroxy-methylene-cyclohexene: Intermediate (3)

This material was prepared in an identical manner to Example 1 from 40ml (37.76g, 0.517 mol) of dimethylformamide, 37 ml (60.87g, 0.400 mol) of phosphorus oxychloride, and 11.22g (0.10 mol) of 4-methylcyclohexanone in 55ml of DMF. The yield was 13.51g (72%); melting point = 140 to 142 °C. TLC indicated the compound to be very pure. IR and NMR were in agreement with the assigned structure.

## EXAMPLE 4

### Preparation of 5-t-butyl-2-chloro-1-formyl-3-hydroxymethylene-cyclohexene: Intermediate (4)

Into a 500ml 3-necked round bottomed flask equipped with magnetic stirrer, nitrogen blanket, condenser, thermometer and pressure-equalizing addition funnel; was placed 40ml (37.76g, 0.517 mol) of dry dimethylformamide. The material was cooled in an ice bath and 37 ml (60.87g, 0.400 mol) of phosphorus oxychloride was slowly added over 45 minutes through the addition funnel. The temperature was kept at 10 to 15 °C throughout the addition. Upon completion of the addition, the ice bath was removed, replaced with a water bath, and the reaction mixture allowed to warm to room temperature. The reaction was then kept at room temperature for 30 minutes.

To the thus formed Villsmeier adduct was slowly added a solution of 15.43g (0.10 mol) of 4-t-butyl cyclohexanone in 50ml in dry DMF. This addition was carried out using a clean pressure-equalizing addition funnel. A water bath was kept under the reaction vessel to control the exotherm. The addition was carried out over 30 minutes and the final temperature was 30 °C. The water bath was removed, replaced by a heating mantle and the orange solution kept between 50 to 60 °C for 3 hours.

The orange-red solution was poured onto 300ml of ice, 200ml of water was added, and the solution stirred. After about 20 minutes, a yellow precipitate began to develop. A yellow mass also formed. The reaction was allowed to stir overnight. The crude product was filtered off, redissolved in DMF and reprecipitated into water to give the product. The yellow powder was filtered off and washed with copious

amounts of water until the washings were neutral to pH paper. The material was vacuum dried in air, and finally dried in a vacuum oven at 50°C to afford 20.84g (91%) of pure product; melting point = 154 to 157°C. TLC indicated the compound to be very pure. IR and NMR were in agreement with the proposed structure.

EXAMPLE 5

Preparation of 5-phenyl-2-chloro-1-formyl-3-hydroxymethylene-cyclohexene: Intermediate (5)

This material was prepared in an identical manner to Example 4 from 40ml (37.76g, 0.517 mol) of dimethylformamide, 37ml (60.87g, 0.400 mol) of phosphorus oxychloride, and 17.42g (0.10 mol) of 4-phenylcyclohexanone in 55ml of DMF. The yield was 15.80g (68%); melting point = 162°C. TLC indicated the compound to be very pure. IR and NMR were in agreement with the assigned structure.

EXAMPLE 6

Preparation of Cyanine Dye (1)

Into a 250ml beaker were placed 5.41g (0.015 mol) of 1-ethyl-2,3,3-trimethyl-5-nitroindolenium iodide, 1.72g (0.0075 mol) of Intermediate (4), 50ml of acetic acid, and 50ml of acetic anhydride. A magnetic stirrer was added and stirring and heating were begun. Heating to boiling resulted in a dark brown solution which turned green as the reaction occurred. Boiling for 30 minutes followed by cooling to room temperature resulted in crystallization of the dye as fine yellow crystals. Drying in vacuo afforded 5.12g of pure dye; melting point = 193°C (dec), $\lambda_{max}$ = 803nm. IR and NMR were in agreement with the proposed structure. Mass spectrum of the compound gave a positive ion at 657 amu indicative of the cation portion of the molecule. An additional cationic peak at 750 amu indicated that some of the chlorine in the central ring had been replaced with iodine. Negative ions found at 127 and 381 amu are indicative of the tri-iodide anion.

EXAMPLE 7

Preparation of Cyanine Dye (2)

This dye was prepared in an identical manner to Cyanine Dye (1) from 5.41g (010.5 mol) of 1-ethyl-2,3,3-trimethyl-5-nitroindolenium iodide and 1.40g (0.0075 mol) of Intermediate (2). The yield was 3.64g; melting point = 246°C (dec), $\lambda_{max}$ = 801nm. Both IR and NMR were in agreement with the proposed structure. Mass spectrum of the compound gave a positive ion at 615 amu indicative of thc cation portion of the molecule. An additional cationic peak at 707 amu indicated that some of the chlorine in the central ring had been replaced with iodine. Negative ions found at 127 and 381 amu are indicative of the tri-iodide anion.

| | C | H | N | Cl | I |
|---|---|---|---|---|---|
| calculated | 42.16 | 4.04 | 5.62 | 3.56 | 38.2 |
| found | 41.3 | 3.9 | 5.5 | 3.4 | 39.6 |

EXAMPLE 8

Preparation of Cyanine Dye (3)

This dye was prepared in an identical manner to cyanine Dye (1) from 4.55g (0.01 mol) of 1-ethyl-2,3,3-trimethyl-5-phenylsulfonylindolenium iodide and 1.14g (0.005 mol) of Intermediate (4). The yield was 3.22g; melting point = 200 °C (dec), $\lambda_{max}$ = 796 nm. Both IR and NMR were in agreement with the proposed structure. Mass spectrum of the compound gave a positive ion at 847 amu indicative of the cation portion of the molecule. An additional cationic peak at 939 amu indicated that some of the chlorine in the central ring had been replaced with iodine. Negative ions found at 127 and 381 amu are indicative of the tri-iodide anion.

| | C | H | N | Cl | I |
|---|---|---|---|---|---|
| calculated | 48.85 | 4.59 | 2.28 | 2.88 | 30.97 |
| found | 50.70 | 4.8 | 2.3 | 3.3 | 27.1 |

EXAMPLE 9

Preparation of Cyanine Dye (4)

Into a 100ml beaker were placed 20ml of acetic acid, 15ml of acetic anhydride, 0.866g (0.005 mol) of 2-methylene-1,3,3-trimethylindolenine, 0.622g (0.0025 mol) of Intermediate (5) and 0.5g (0.061mol) of sodium acetate. A magnetic stirrer was added and stirring and heating were begun. Heating to boiling resulted in a colour change of the solution from light red to amber and finally to dark green. Boiling for 15 minutes was followed by addition of 2.00g (0.018 mol) of sodium tetrafluoroborate in 5 ml of water. Cooling to room temperature resulted in crystallization of the dye as dark crystals. Washing of the crystals with acetic acid was followed by washing with water, methanol, and finally ether. The crystals were air dried to give 0.65g (40%) of the desired dye; melting point = 192 to 195 °C (green melt followed by bubbling - decomposition), $\lambda_{max}$ = 780nm ($\epsilon$ = 3.22 x $10^5$). IR and NMR were in agreement with the proposed structure. Mass spectrum of the compound gave a positive ion at 559 amu indicative of the cation portion of the molecule and a negative ion at 87 amu indicative of the tetrafluoroborate anion.

EXAMPLE 10

Preparation of Cyanine Dye (5)

Into a 100ml beaker were placed 20ml of acetic acid, 15ml of acetic anhydride, 0.866g (0.005 mol) of 2-methylene-1,3,3-trimethylindolenine, 0.572g (0.0025 mol) of Intermediate (4) and 0.5g (0.061 mol) of sodium acetate. A magnetic stirrer was added and stirring and heating were begun. Heating to boiling resulted in a colour change of the solution from reddish - yellow to amber and finally to dark green. Boiling for 15 minutes was followed by cooling below boiling and addition of 2.00g (0.018 mol) of sodium tetrafluoroborate in 5 ml of water. A precipitate developed. Cooling to room temperature, filtration and washing and trituration of the green powder with acetic acid was followed by washing with water, methanol, and finally ether gave the dye as a fine green powder. The powder was air dried to give 0.61g (39%) of the desired dye; melting point = 241 to 242 °C (bubbling - decomposition), $\lambda_{max}$ = 782 nm ($\epsilon$ = 3.41 x $10^5$). IR and NMR were in agreement with the proposed structure. Mass spectrum of the compound gave a positive ion at 539 amu indicative of the cation portion of the molecule and a negative ion at 87 amu indicative of the tetrafluoroborate anion.

## EXAMPLE 11

### Preparation of Cyanine Dye (6)

Into a 100 ml beaker were placed 20 ml of acetic acid, 15 ml of acetic anhydride, 0.866g (0.005 mol) of 2-methylene-1,3,3-trimethylindolenine, 0.47g (0.0025 mol) of Intermediate (3) and 0.5g (0.061 mol) of sodium acetate. A magnetic stirrer was added and stirring and heating were begun. As the temperature rose, the reactants dissolved and the solution changed colour from golden brown to dark green. Boiling for 15 minutes was followed by cooling below boiling and addition of 2.00g (0.016 mol) of sodium perchlorate in 5 ml of water. Gold coloured crystals formed. Cooling to room temperature, filtration and washing and trituration of the crystals with acetic acid was followed by washing and trituration with ether to give the dye. The crystals were air dried to give 0.81g (54%) of the desired dye; melting point = 257 to 258°C (bubbling - decomposition), $\lambda_{max}$ = 804 nm ($\epsilon$ = 2.87 x $10^5$). IR and NMR were in agreement with the proposed structure. Mass spectrum of the compound gave a positive ion at 497 amu indicative of the cation portion of the molecule and negative ions at 99 and 101 amu indicative of the perchlorate anion.

## EXAMPLE 12

### Preparation of Cyanine Dye (7)

Into a 100ml beaker were placed 2oml of acetic acid, 15ml of acetic anhydride, 1.810g (0.005 mol of 1-ethyl-5-nitro-2,3,3-trimethylindolenium iodide, 0.47g (0.0025 mol) of Intermediate (3) and 0.5g (0.061 mol) of sodium acetate. A magnetic stirrer was added and stirring and heating were begun. As the temperature rose, the reactants dissolved and the solution changed colour from brown - yellow to muddy green. Boiling for 15 minutes was followed by cooling below boiling and addition of 2.00g (0.016 mol) of sodium perchlorate in 5ml of water. Upon cooling to room temperature a gold bronze powder formed. Filtration followed by washing and trituration of the powder with acetic acid was followed by washing and trituration with ether to give the dye as a fine green bronze powder. The material was air dried to give 0.76g (42%) of the desired dye; melting point = 240 to 250°C (bubbling - decomposition), $\lambda_{max}$ = 803 nm ($\epsilon$ = 2.73 x $10^5$). IR and NMR were in agreement with the proposed structure. Mass spectrum of the compound gave a positive ion at 615 amu indicative of the cation portion of the molecule. An addition cationic peak at 707 amu indicates some of the chlorine in the central ring was replaced with iodine. Negative ions found at 99 and 101 amu are indicative of the perchlorate anion.

## EXAMPLE 13

### Preparation of Cyanine Dye (8)

Into a 100ml beaker were placed 20ml of acetic acid, 15ml of acetic anhydride, 0.866g (0.005 mol) of 2-methylene-1,3,3-trimethylindolenine, 0.622g (0.0025 mol) of Intermediate (5) and 0.4g (0.061 mol) of sodium acetate. A magnetic stirrer was added, stirring was begun, and 1.00g (0.006 mol) of potassium iodide was added. Heating was begun. As the temperature rose, the reaction mixture went from brown to green. Boiling for 30 minutes was followed by cooling. No crystals formed, so the solution was transferred to a flask and solvent removed at reduced pressure to afford a solid. Addition of ether was followed by filtration and washing of the solid with methanol to afford the dye as bronze crystals. The material was air dried to give 0.92g (39%) of the desired dye; melting point = 173 to 175°C (compound turned from green to red between 130 to 140°C). NMR was in agreement with the proposed structure. Mass spectrum of the compound gave a positive ion at 559 amu indicative of the cation portion of the molecule. Negative ions found at 127 and 381 amu are indicative of the tri-iodide anion.

EXAMPLE 14

Preparation of Cyanine Dye (9)

Into a 150ml beaker were placed 25ml of acetic acid, 25ml of acetic anhydride, 1.810g (0.005 mol) of 1-ethyl-5-nitro-2,3,3-trimethylindolenium iodide, 0.622g (0.0025 mol) of Intermediate (5). A magnetic stirrer was added and stirring and heating were begun. Boiling for 30 minutes was followed by cooling, very little precipitate formed. Addition of ether resulted in precipitation of the dye. Filtration followed by washing and trituration with ether was followed by washing with a small amount of methanol to afford the dye as a dark blue powder. The material was air dried to give 0.57g (22%) of the desired dye; melting point = 234°C. IR and NMR were in agreement with the proposed structure. Mass spectrum of the compound gave a positive ion at 677 amu indicative of the cation portion of the molecule. An additional cationic peak at 769 amu indicates some of the chlorine in the central ring was replaced with iodine. Negative ions found at 127 and 381 amu are indicative of the tri-iodide anion.

EXAMPLE 15

Preparation of Cyanine Dye (10)

Into a 150ml beaker were placed 25ml of acetic acid, 25ml of acetic anhydride, 1.810g (0.005 mol) of 1-ethyl-5-nitro-2,3,3-trimethylindolenium iodide, 0.47g (0.0025 mol) of Intermediate (3). A magnetic stirrer was added and stirring and heating were begun. Boiling for 30 minutes resulted in the formation of a green solution. Cooling, followed by addition of ether resulted in the precipitation of the dye. Filtration followed by washing and trituration with ether afforded the dye as a dark green-black powder. The material was air dried to give 0.81g (33%) of desired dye; melting point = 244°C (dec). IR and IMR were in agreement with the proposed structure. Mass spectrum of the compound gave a positive ion at 615 amu indicative of the cation portion of the molecule. An additional cationic peak at 707 amu indicated some of the chlorine in the central ring was replaced with iodine. Negative ions found at 127 and 381 amu are indicative of the tri-iodide anion.

EXAMPLE 16

Preparation of Cyanine Dye (11)

Into a 150ml beaker were placed 20ml of acetic acid, 20ml of acetic anhydride, 1.14g (0.0025 mol) of 1-ethyl-5-phenylsulphonyl-2,3,3-trimethylindolenium iodide, 0.31g (0.00125 mol) of Intermediate (5). A magnetic stirrer was added and stirring and heating were begun. Boiling for 30 minutes resulted in the formation of a green solution. Cooling to room temperature and cooling in ice was followed by filtration. Washing with a small amount of methanol and trituration with ether afforded the dye as bronze crystals. Concentration of the mother liquors and washings gave a second crop. The combined crops were air dried to give 0.96g (61%) of the desired dye; melting point = 166°C. IR and NMR were in agreement with the proposed structure. Mass spectrum of the compound gave a positive ion at 867 amu indicative of the cation portion of the molecule. An additional cationic peak at 959 amu indicated some of the chlorine in the central ring was replaced with iodine. Negative ions found at 127 and 381 amu are indicative of the tri-iodide anion.

EXAMPLE 17

Preparation of Cyanine Dye (12)

This dye was prepared in an identical manner to that for Cyanine Dye (11), but using 0.24g (0.00125 mol) of Intermediate (3). The combined crops were air dried to give 0,96g (65%) of the desired dye; melting point = 279 °C. IR and NMR were in agreement with the proposed structure. Mass spectrum of the compound gave a positive ion at 805 amu indicative of the cation portion of the molecule. An additional cationic peak at 897 amu indicated some of the chlorine in the central ring was replaced with iodine. Negative ions found at 127 and 381 amu are indicative of the tri-iodide anion.

EXAMPLE 18

Preparation of Cyanine Dye (13)

This dye was prepared in an identical manner to that for Cyanine Dye (11), but using 0.77g (0.002 mol) of 1-butyl-5-nitro-2,3,3-trimethyl-indolenium iodide, 0.187g (0.001 mol) of Intermediate (2) and 10 ml each of acetic acid and acetic anhydride. After cooling, filtration and washing with ether, methanol and ether again, dye was air dried to give 0.478g (46%) of the desired dye; melting point = 201 to 214 °C (dec). IR and NMR were in agreement with the proposed structure. Mass spectrum of the compound gave a positive ion at 671 amu indicative of the cation portion of the molecule. An additional cationic peak at 763 amu indicated some of the chlorine in the central ring was replaced with iodine. Negative ions found at 127 and 381 amu are indicative of the tri-iodide anion.

EXAMPLE 19

Preparation of Cyanine Dye (14)

This dye was prepared in an identical manner to that for Cyanine Dye (11), but using 0.911g (0.002 mol) of 1-ethyl-5-phenylsulphonyl-2,3,3-trimethyl indolenium iodide, 0.187g (0.001 mol) of Intermediate (2) and 10ml each of acetic acid and acetic anhydride. After cooling, filtration and washing with ether, methanol and ether again, dye was air dried to give 0.75g (63%) of the desired dye. NMR was in agreement with the proposed structure. Mass spectrum of the compound gave a positive ion at 805 amu indicative of the cation portion of the molecule. An additional cationic peak at 897 amu indicated some of the chlorine in the central ring was replaced with iodine. Negative ions found at 127 and 381 amu are indicative of the tri-iodide anion.

EXAMPLE 20

Preparation of Cyanine Dye (15)

Into a 100ml beaker were placed 50ml of ethanol, 1.22g (0.004 mol) of 1-ethyl-benzthiazolium iodide, 0.497g (0.002 mol) of Intermediate (5) and 0.5g (0.006 mol) of sodium acetate. Stirring and heating were begun and the red solution heated at boiling for 15 minutes. A gold precipitate formed as the reaction proceeded. Stirring and cooling was followed by filtration, washing, and trituration with ethanol until the red colour was discharged afforded 0.50g (35%) of the desired dye as bronze crystals; melting point = 261 to 263 °C (dec.). IR and NMR were in agreement with the proposed structure. Mass spectrum of the compound gave a positive ion at 567 amu indicative of the cation portion of the molecule. Negative ions found at 127 but not 381 indicate that the molecule formed under these conditions is the iodide.

Whilst Examples 6 to 20 describe the preparation of cyanine dyes having specific anions it will be readily appreciated that a wide range of anions may be utilised.

The use of various dye-base heterocycle salts as condensing agents to form dyes is well known. By

using varying anions in the dye-base heterocycle salts, alternative anions of the dyes of this invention can be prepared. U.S. Patent No. 4,337,305; Examples 22 and 25 disclose the preparation of different counterions of other infra-red dyes by appropriate selection of reagents. For example, use of the p-toluenesulfonate salt of the dye- base heterocycle results in the formation of the dye as the p-toluene sulfonate salt.

Alternatively, anion exchange can be carried out during the dye synthesis itself. This can be accomplished by addition to the reaction mixture of a large excess of a salt of the anion to be formed. This technique is demonstrated in the preparation of Cyanine Dye (7) as shown in Example 12 herein.

A further method of forming various anions of the dyes is by the use of the free dye-base in the coupling reaction. In this reaction, addition of a salt of the anion to be formed takes place during the reaction or before cooling. Again, the dye with the desired anion crystallizes out upon cooling.

This technique is shown in the preparation of Cyanine Dyes (4) to (6) in Examples 9 to 11 herein.

Anion exchange can be carried out by taking the initially isolated dye salt, redissolving in a solvent, and adding a large excess of a solution of a salt of the anion to be exchanged. Cooling is known to result in the precipitation or crystallization of the dye salt with the anion exchanged.

## EXAMPLE 21

### Preparation of and Evaluation of Photoconductive Samples

Five solutions were prepared each containing the following materials;

| | |
|---|---|
| 0.600 g | Vitel PE-200 polyester resin |
| 0.400 g | bis-(N-ethylbenzo-1,2,-carbazolyl) phenylmethane |
| 4.5 g | Dichloromethane |
| 4.5 g | 1,2-Dichloroethane |

To solutions 1 and 2 were added 0.065 g of Compound Nos. 1 and 2 respectively. To solution 3 was added 0.005g of Compound No. 3. All solutions were - $6.5 \times 10^{-6}$M in dye (if the dye were the iodide).

Each coating was made in a 5 inch (12.7cm) wide strip of aluminized polyester using a 4 inch (10.2cm) wide knife coated set at a wet thickness of 4 mil (100μ). Each coating was air dried and then oven dried at 80°C for 15 min. The dry thickness was approximately 10μ.

Each sample was tested for photoconductivity. The sample was charged for 4 sec, allowed to dark decay for 2 sec and then exposed to light of 820 and 830 nm for 10 sec. The amount of energy needed to half discharge the photoconductor is taken as a measure of the photosensitivity of the photoconductor. Results are shown in the following Table.

Table

| Compound No. | Charge Acceptance | Energy to Vo/2 ergs/$cm^2$ | |
|---|---|---|---|
| | | at 820 nm | at 830 nm |
| 1 | 750V | 80.9 | 78.5 |
| 2 | 750V | 48.1 | 53.8 |
| 3 | 725V | 105. | 124. |
| Vo is the initial charge acceptance voltage. | | | |

A lititude of modification, change and substitution is intended in the foregoing disclosure and in some instances some features of the invention will be employed without a corresponding use of other features. Accordingly, it is appropriate that the appended claims be construed broadly and in a manner consistent with the scope of the invention therein.

The use of triiodide as a counterion in dyes has been found to provide unique sensitization benefits and is the subject matter of a separate copending application filed this day. The present class of dyes may exclude the use of triiodide as the anion. That is, $X^-$ may be any counterion other than triiodide.

## Claims

1. A compound of the formula:

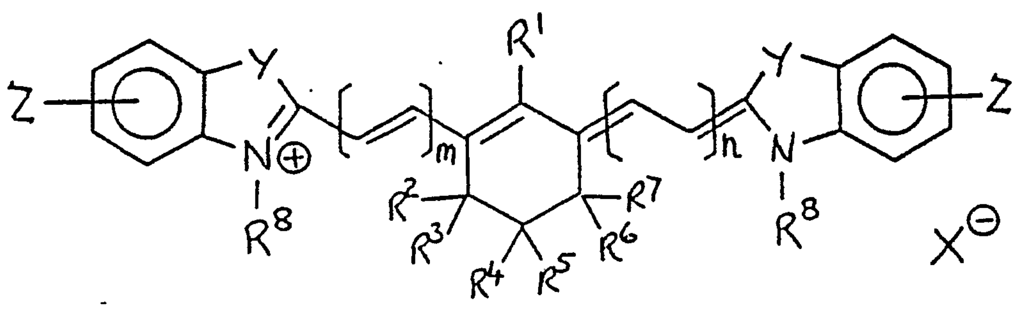

(I)

in which:

m and n are 0 or integers selected from 1 to 5 such that (m + n) is at least 2,

$R^1$ is a halogen atom,

$R^2$ to $R^7$ are independently selected from the group consisting of hydrogen, alkyl groups of up to 6 carbon atoms; aryl groups of up to 20 carbon atoms; halogen; or any two of $R^2$ to $R^7$ on adjacent carbon atoms may comprise the necessary atoms to complete a 5- or 6-membered carbocyclic or heterocyclic ring; at least one of $R^2$ to $R^7$ being other than hydrogen;

each $R^8$ independently represents a substituent of up to 20 carbon atoms selected from the group consisting of optionally substituted acyclic hydrocarbon groups; alkaryl groups; and aryl groups;

each Y is independently selected from the group consisting of S, Se, C=C and $CR^9R^{10}$ in which $R^9$ and $R^{10}$ are independently represent a substituted or non-substituted, aliphatic groups of up to 20 carbon atoms, or $R^9$ and $R^{10}$ together represent the necessary atoms to complete a 5- or 6-membered carbocyclic ring,

each Z independently represents one or more substituents selected from the group consisting of hydrogen, halogen, nitro, cyano, optionally substituted alkylsulphonyl of up to 12 carbon atoms, optionally substituted arylsulphonyl of up to 12 carbon atoms and optionally substituted arylcarbonyl of up to 12 carbon atoms, and

$X^-$ represents an anion which may optionally be incorporated with one $R^8$ group to form an internal salt, with the proviso that:

(i) when $R^2 = R^3 = R^6 = R^7 = H$, $R^4 = R^5 = CH_3$ and Y is $CR^9R^{1^\circ}$ then each Z is not halogen, and
(ii) when $R^1 = Cl$, $R^4 = CH_3$ and Y is S at least one of $R^2$, $R^3$, $R^5$, $R^6$ and $R^7$ is other than hydrogen.

2. A compound as claimed in Claim 1 in which $R^1$ is chlorine.
3. A compound as claimed in Claim 2 in which Y is $CR^9R^{1^\circ}$.
4. A compound as claimed in Claim 1 in which $R^1$ is chlorine and Y is $C(CH_3)_2$.
5. A compound as claimed in Claim 2 in which $R^8$ is selected from the group consisting of ethyl and methyl.
6. A compound as claimed in Claims 2-4 in which $R^2$ to $R^6$ are hydrogen and $R^7$ is methyl.
7. A compound of the formula:

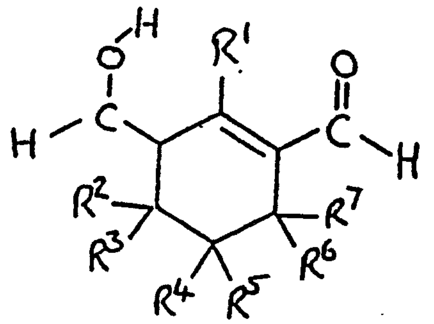

(II)

in which:
$R^1$ is a halogen atom,
$R^2$ to $R^7$ are independently selected from the group consisting of hydrogen, alkyl groups of up to 6 carbon atoms; aryl groups of up to 20 carbon atoms; cyano; halogen; or any two of $R^2$ to $R^7$ on adjacent carbon atoms may comprise the necessary atoms to complete a 5- or 6-membered carbocyclic or heterocyclic ring; at least one of $R^2$ to $R^7$ being other than hydrogen;
with the proviso that:
(i) at least one of $R^2$ to $R^7$ is other than hydrogen,
(ii) when $R^5$ is t-butyl at least one of $R^2$, $R^3$, $R^4$, $R^6$ and $R^7$ is other than hydrogen, and
(iii) when $R^4$ and $R^5$ are $CH_3$ and $R^2$, $R^3$, $R^5$ and $R^6$ are hydrogen, $R^1$ is not Br.

8. A compound as claimed in Claim 7 in which $R^2$, $R^3$, $R^5$, $R^6$ and $R^7$ are hydrogen and R4 is selected from the group consisting of methyl and phenyl.
9. A method for preparing 2-chloro-1-formyl-3-hydroxymethylene-cyclohexene or a substituted derivative thereof which comprises reacting dimethylformamide with a phosphorus oxychloride to form a reaction product and thereafter adding an optionally substituted cyclohexanone and allowing the resulting mixture to react to form the desired product, in which the reaction is conducted in the presence of excess dimethylformamide as a solvent and/or in the presence of a water miscible solvent.
10. A method for the preparation of a copy of the formula

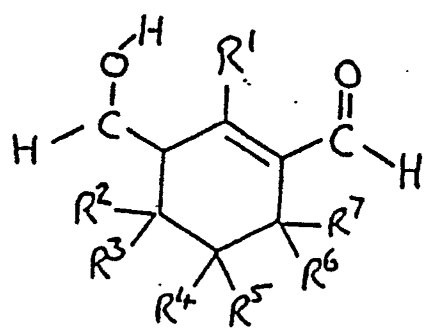

(II)

in which:
$R^1$ is a halogen atom,
$R^2$ to $R^7$ are independently selected from the group consisting of hydrogen, alkyl groups of up to 6 carbon atoms; aryl groups of up to 20 carbon atoms; cyano; halogen; or any two of $R^2$ to $R^7$ on adjacent carbon

atoms may comprise the necessary atoms to complete a 5- or 6-membered carbocyclic or heterocyclic ring; at least one of $R^2$ to $R^7$ being other than hydrogen;
with the proviso that:
(i) at least one of $R^2$ to $R^7$ is other than hydrogen, (ii) when $R^5$ is t-butyl at least one of $R^2$, $R^3$, $R^4$, $R^6$ and $R^7$ is other than hydrogen, and
(iii) when $R^4$ and $R^5$ are $CH_3$ and $R^2$, $R^3$, $R^5$ and $R^6$ are hydrogen, $R^1$ is not Br
which comprises reacting dimethylformamide with a phosphorus oxyhalide to form a reaction product and thereafter adding an optionally substituted cyclohexanone and allowing the resulting mixture to react to form the desired product, in which the reaction is conducted in the presence of excess dimethylformamide as a solvent and/or in the presence of a water miscible solvent.